**Europäisches Patentamt**

**European Patent Office**

**Office européen des brevets**

(19)

(11) Numéro de publication: **0 155 865**
**B1**

(12)

# FASCICULE DE BREVET EUROPEEN

(45) Date de publication du fascicule du brevet:
**01.06.88**

(21) Numéro de dépôt: **85400291.2**

(22) Date de dépôt: **19.02.85**

(51) Int. Cl.⁴: **G 21 C 3/32,** G 21 C 19/20,
G 21 C 7/04

(54) Assemblage de combustible nucléaire et procédé d'exploitation de réacteur nucléaire en comportant application.

(30) Priorité: **22.02.84 FR 8402684**

(43) Date de publication de la demande:
**25.09.85 Bulletin 85/39**

(45) Mention de la délivrance du brevet:
**01.06.88 Bulletin 88/22**

(84) Etats contractants désignés:
**BE CH DE GB IT LI SE**

(56) Documents cités:
**DE - A - 2 318 603**
**DE - A - 2 815 200**
**DE - A - 2 839 667**
**FR - A - 1 503 127**
**FR - A - 1 504 651**
**FR - A - 2 154 753**
**FR - A - 2 520 916**
**GB - A - 1 084 463**
**US - A - 3 335 061**

(73) Titulaire: **FRAMATOME, Tour Fiat 1 place de la Coupole,**
**F-92400 Courbevoie (FR)**

(72) Inventeur: **Dehon, Claude, 295, rue Grande,**
**F-69600 Oublins (FR)**
Inventeur: **Kolmayer, André, 37, rue de la Bourse,**
**F-69002 Lyon (FR)**

(74) Mandataire: **Fort, Jacques et al, CABINET**
**PLASSERAUD 84, rue d'Amsterdam, F-75009 Paris (FR)**

ACTORUM AG

## Description

L'invention concerne les réacteurs nucléaires à eau sous pression et notamment un cœur du type défini par le préambule de la revendication 1.

L'invention concerne aussi déjà un cœur de ce type (DE-A-2 815 200), conçu dans le but d'obtenir une répartition de puissance uniforme dans le cœur.

On connaît également des assemblages de combustible utilisables dans un cœur de réacteur nucléaire à eau légère sous pression pour constituer la première charge de matériau fissile (FR-A-1 503 127, FR-A-1 504 651). Le rôle du poison neutronique consommable contenu dans ces assemblages, constitué par un matériau ayant une forte section efficace de capture des neutrons et ne produisant pas d'isotopes fortement absorbants, est de réduire la réactivité initiale du cœur lors du démarrage du processus de fission. La présence de poison permet d'utiliser des charges de matière fissile plus importantes, ce qui augmente la durée du premier cycle de fonctionnement du cœur, au bout duquel il est nécessaire de remplacer une partie des assemblages par des assemblages neufs et de changer la disposition des assemblages restants. Il a également pour but de permettre d'uniformiser la distribution de puissance dans l'ensemble du cœur par répartition appropriée, dans le cœur, des assemblages contenant du poison. Parmi les poisons utilisés, on peut citer le bore, le samarium, l'europium, et surtout le gadolinium, fréquemment sous forme de composé tel qu'un oxyde. En règle générale, on a jusqu'ici disposé ceux des crayons qui contiennent du poison consommable de façon à homogénéiser la répartition de l'antiréactivité qu'ils représentent au sein de l'assemblage. Cela conduit à les écarter des bords de l'assemblage et, souvent, à les rendre adjacents aux tubes guides, fréquemment destinés à recevoir une grappe de crayons mobiles de matériau absorbant appartenant à une barre de commande.

Il ne semble pas que l'on ait apprécié, antérieurement à la présente invention, les inconvénients de cette approche, consistant à utiliser, uniquement pour la première charge du réacteur, des assemblages comportant un poison réparti pour homogénéiser la répartition d'antiréactivité dans l'assemblage pris isolément.

Un premier inconvénient est que cette répartition se traduit par un déséquilibre dans la répartition radiale de la puissance neutronique dissipée dans le cœur. Un second inconvénient est lié à l'abandon de l'emploi de poison dès le second cycle de fonctionnement. On sait qu'à l'issue du premier cycle, on prélève les assemblages constituant la partie centrale du cœur (un tiers des assemblages en général), on déplace les assemblages constituant les parties médiane et périphérique du cœur, respectivement vers les parties centrale et médiane, et on équipe d'assemblages de combustible neufs la partie périphérique libérée. Le bilan global de réactivité du nouveau cœur est évidemment beaucoup moins élevé que celui d'un cœur entièrement neuf et en conséquence ne rend pas nécessaire l'adjonction d'un poison consommable.

En contrepartie, cette moindre réactivité du nouveau cœur, du fait du remplacement d'un tiers de cœur seulement, pénalise l'exploitation du réacteur, du fait que les cycles sont raccourcis, et éloigne le cycle de fonctionnement de l'optimum du point de vue de la combustion de la matière fissile et du volume de combustible à retraiter.

On a déjà songé à allonger les durées de cycle audelà du premier en augmentant l'enrichissement des crayons de combustible ou en augmentant le nombre d'assemblages neufs à chaque rechargement. Mais il faut alors compenser l'excédent initial de réactivité par un accroissement corrélatif de la teneur en bore du réfrigérant, ce qui a le double inconvénient de réduire la sécurité (par diminution en valeur absolue du coefficient de température négatif du modérateur lors du fonctionnement) et d'augmenter le volume des effluents à traiter.

L'invention vise notamment à réduire le déséquilibre de réactivité globale du cœur lors du remplacement d'une fraction du combustible, notamment en améliorant la distribution de puissance en particulier là où voisinent des assemblages neufs et des assemblages ayant subi un cycle. Dans ce but, l'invention propose notamment un cœur du genre ci-dessus défini, conforme à la partie caractérisante de la revendication 1.

L'adoption d'un tel cœur permet une combustion plus poussée de la matière fissile des assemblages si l'on choisit de conserver une durée de cycle élémentaire du même ordre que par le passé: il suffit dans ce cas de placer dans la partie centrale du cœur, d'une part, des assemblages ayant déjà subi un cycle, d'autre part, des assemblages neufs suivant l'invention. Les crayons de poison consommable de ces derniers agissent non seulement sur l'assemblage qui les contient, mais aussi sur les assemblages adjacents, évitant ainsi tout déséquilibre excessif de puissance.

Toutefois, dans un mode avantageux de mise en œuvre de l'invention, les cœurs du type défini cidessus permettent d'allonger la durée d'un cycle élémentaire, donc de diminuer la fréquence des interventions sur le cœur, les arrêts de la centrale et les doses reçues par le personnel.

Le matériau combustible qui sera utilisé dans des assemblages destinés à mettre en œuvre des cycles «longs» présentera généralement un enrichissement en isotopes fissiles plus important que les assemblages utilisés jusqu'ici et également un taux de poison supérieur.

On peut notamment utiliser, comme poison neutronique consommable, le gadolinium sous forme d'oxyde $Gd_2O_3$. L'oxyde de gadolinium a en effet l'intérêt de constituer, avec la poudre de dioxyde d'uranium, une céramique réalisable par mélange à froid et frittage et de ne pas accroîte la difficulté de retraitement du combustible qui le contient.

En contrepartie, le gadolinium a présenté, dans les assemblages utilisés jusqu'ici, un inconvénient dû au fait qu'il a un très grand pouvoir d'absorption et une cinétique de variation d'antiréactivité très rapide, d'où une évolution rapide et importante de la distribution de puissance dans le cœur, provoquant des pics locaux de puissance, qui limitent la puissance globale extractible. Cet inconvénient est écarté, dans le cas de l'invention, du fait que l'effet de l'antiréactivité des crayons de poison s'étend non seulement à l'assemblage qui contient les crayons de combustible contenant un poison consommable, mais aussi aux assemblages adjacents.

Bien que la solution consistant à incorporer le poison neutronique aux pastilles de combustible nucléaire constitue une solution particulièrement intéressante, elle n'est pas exclusive et, en particulier, on peut incorporer le poison neutronique aux crayons de combustible sous forme d'un revêtement ou de manchons rapportés (FR-A-2 520 916).

Une solution commode consiste à disposer les crayons contenant du poison dans des alvéoles du réseau qui sont les plus éloignés de ceux occupés par les tubes guides constituant des veines d'eau, donc des trajets fortement refroidis et ne comprenant pas de crayon générant de l'énergie soit par fission, soit par absorption du rayonnement gamma provenant du poison. Dans les assemblages combustibles habituellement utilisés ayant un grand nombre d'alvéoles (un cas typique étant celui d'un réseau carré à 17×17 alvéoles), les crayons contenant du poison sont placés de façon que l'axe de chacun de ces crayons soit séparé de chaque tube guide constituant veine d'eau par plus de deux pas du réseau. Souvent la solution la plus avantageuse consistera à placer les crayons contenant du poison à la périphérie du réseau, alors que les tubes guides sont répartis dans des alvéoles écartés d'au moins deux pas des alvéoles qui sont situés à la périphérie.

L'invention propose aussi un procédé d'émploitation de réacteur nucléaire à eau légère sous pression conforme à la partie caractérisante de la revendication 5.

L'invention sera mieux comprise à la lecture de la description qui suit de modes particuliers d'exécution de l'invention donnés à titre d'exemples non limitatifs, et de la comparaison qui en est faite avec l'art antérieur.

La description se réfère aux dessins qui l'accompagnent, dans lesquels:

les figures 1c, 1b et 1c sont des vues schématiques, en coupe suivant un plan transversal au sens de circulation du réfrigérant, montrant la répartition des tubes guides et des crayons contenant du poison dans des demi-assemblages suivans l'art antérieur;

— la figure 2, similaire aux figures 1a, 1b et 1c, montre la répartition des tubes guides et des crayons contenant du poison dans un assemblage suivant l'invention;

— la figure 3 donne les courbes représentatives de la valeur du pic de puissance radiale, exprimée sous forme du rapport entre la puissance fournie par le crayon le plus chaud et la puissance moyenne par crayon dans l'assemblage, en fonction de l'épuisement du combustible, exprimée en MWj par assemblage, pour l'assemblage de la figure 2 (courbe 2) et les assemblages des figures 1a–1c (courbes 1a, 1b, 1c), l'assemblage occupant une position représentative dans le cœur;

— la figure 4 montre la variation de la réactivité d'un assemblage non muni de poison consommable (courbe A) et celle d'un assemblage contenant du poison consommable (courbe B) en fonction de l'épuisement du combustible, encore exprimée en MWj par assemblage.

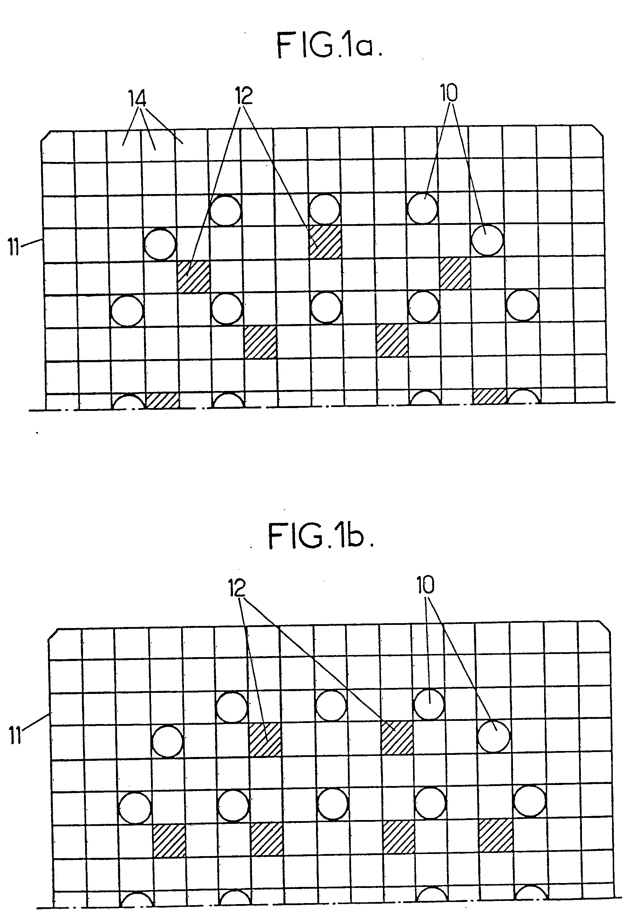

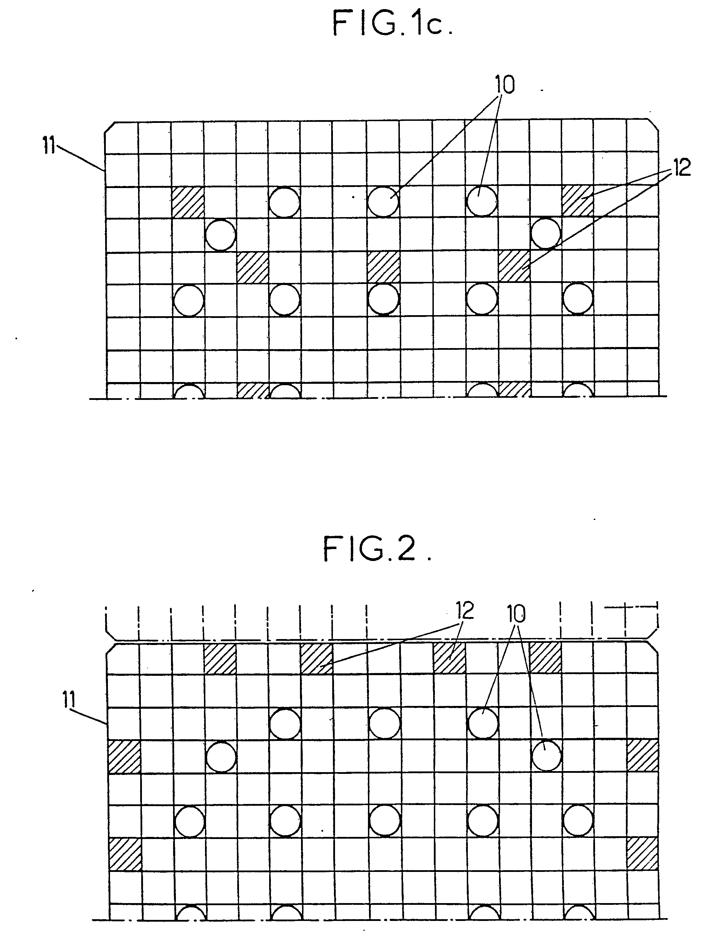

Les assemblages, dont une coupe transversale est donnée en figure 1a, 1b, 1c et 2, peuvent avoir une constitution générale classique, c'est-à-dire comporter deux pièces d'extrémité (non représentées) reliées par des tubes guides 10 constituant des veines d'eau lorsqu'ils sont vides. Ces tubes guides sont prévus pour qu'on puisse y déplacer en bloc une grappe de crayons absorbant les neutrons et appartenant à une barre de commande du réacteur. Ces guides sont disposés dans des alvéoles d'un réseau régulier, à mailles carrées dans le cas illustré, et placés dans le réseau de façon à assurer une répartition homogène de l'absorption neutronique. Le réseau peut notamment être matérialisé par des grilles 11, dont l'une apparaît sur les figures 1a à 2, constituées de plaquettes assemblées. Ces grilles 11, qui constituent avec les tubes guides et les pièces d'extrémité un squelette de structure, délimitent des alvéoles 14 de réception de crayons de combustible. On a représenté, en hachures, sur les figures 1a, 1b, 1c et 2, ceux de ces alvéoles qui reçoivent des crayons de combustible 12 contenant également du poison neutronique.

Les figures 1a, 1b et 1c montrent trois répartitions de crayons contenant du poison neutronique qui sont classiquement utilisés dans des assemblages à 17×17 alvéoles et vingt-quatre tubes guides 10. On voit que les crayons contenant du poison 2 sont placés dans des alvéoles adjacents aux tubes guides 10, ce qui provoque un déséquilibre radial de la puissance neutronique.

Au contraire, dans l'assemblage suivant un mode particulier de réalisation de l'invention, qui est représenté en figure 2, les crayons 12 contenant du poison sont placés dans des alvéoles périphériques du réseau de façon à être le plus éloignés possible:

— du point chaud de l'assemblage, généralement constitué par la zone occupée par des crayons fissiles dans la partie centrale, où la puissance fournie est la plus élevée,

— des veines hydrauliques constituées par les tubes guides 10 lorsque ces derniers ne contiennent ni crayons absorbant appartenant à une barre de commande, ni bouchons.

On voit que l'axe de chacun des crayons 12 contenant du poison est éloigné d'au moins deux pas de l'axe du tube guide 10 le plus proche. On réduit ainsi très considérablement le nombre de crayons contenant uniquement du matériau fissile qui subissent à la fois le voisinage immédiat d'un tube guide 10 et celui d'un crayon contenant du poison 12. On voit au surplus que, lorsque les assemblages adjacents (une fraction d'un de ces assemblages étant montrée en tirets sur la figure 2) ne sont pas équipés de poison, l'emplacement des crayons contenant du poison 12 correspond à une configuration optimisée de la répartition de l'antiréactivité entre assemblages adjacents.

Lorsque l'assemblage est destiné à être utilisé dans un cœur prévu pour que des assemblages adjacents contiennent tous des crayons contenant du poison, l'effet cumulé d'antiréactivité de deux crayons 12 qui vont se retrouver adjacents est choisi pour que l'augmentation de puissance, dans les crayons immédiatement voisins (due à l'absorption par ces crayons des rayons gamma provenant des crayons 12), ne dépasse pas les limites prévues pour ces crayons.

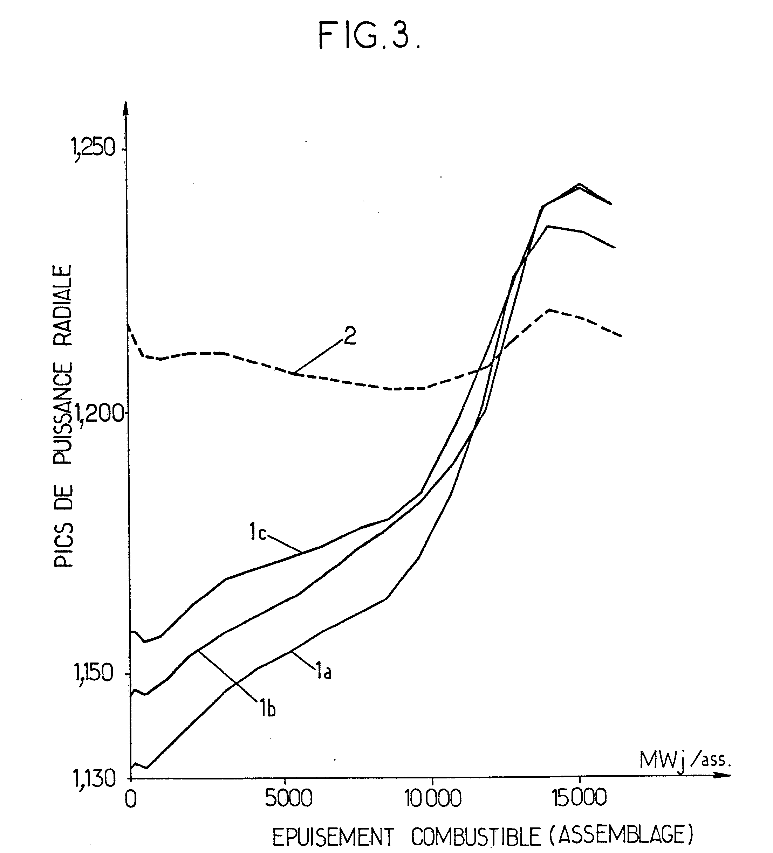

L'effet favorable de la mise en œuvre de l'invention apparaît sur la figure 3. Lorsque les crayons 12 contenant du poison neutronique sont placés à la périphérie de l'assemblage, comme cela est illustré sur la figure 2, le pic de puissance radiale (rapport entre la puissance émise par le crayon le plus chargé et la puissance moyenne par crayon dans l'assemblage) garde une valeur sensiblement constante pendant toute la durée de vie de l'assemblage. Au contraire, dans le cas des assemblages des figures 1a, 1b et 1c, ce pic se modifie considérablement et, s'il est faible au début de la vie de l'assemblage, il devient notablement supérieur à celui que l'on trouve dans le cas de l'assemblage de la figure 2 lorsque le poison est consommé.

On voit donc que l'élimination progressive du poison neutronique et la diminution locale d'absorption qui en découle ne pénalisent pas le cœur du réacteur par accroissement excessif du pic de puissance radiale en fin de vie et, au surplus, ne lui imposent pas de transitoire important le long du cycle.

L'exemple montré en figure 3 correspond à des assemblages dont les crayons de combustible contiennent des pastilles de dioxyde d'uranium enrichi à 3,25% en U235, tandis que les crayons 12 contiennent des pastilles d'enrichissement plus faible, à 8% en poids de $Gd_2O_3$. Ces teneurs ne sont pas impératives et en particulier, on pourra généralement faire varier la teneur en $Gd_2O_3$ jusqu'à 15% environ.

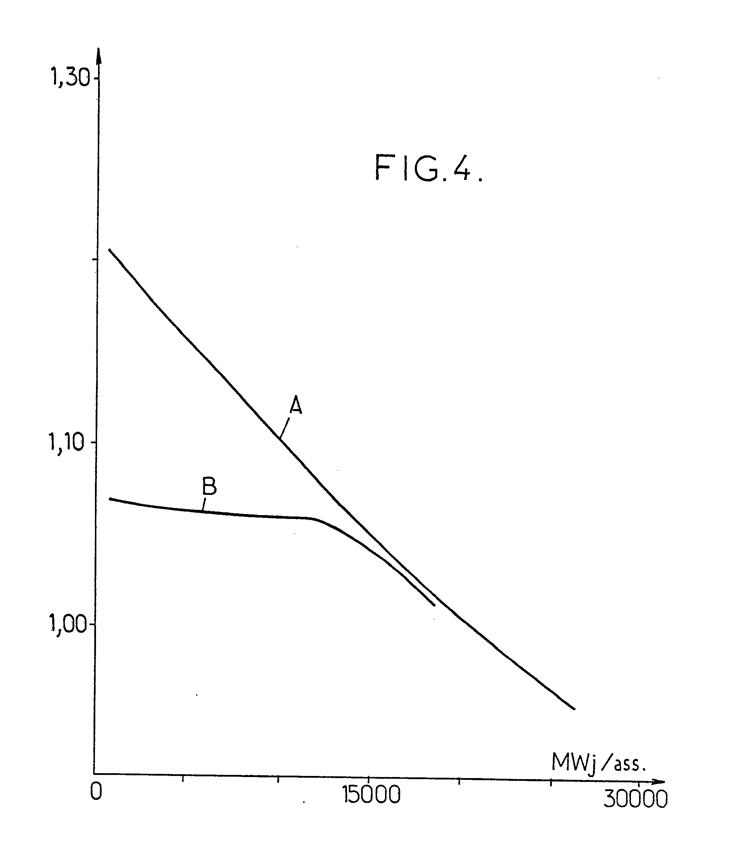

L'effet de la présence de crayons contenant du poison sur la réactivité globale d'un assemblage apparaît sur la figure 4. On voit qu'un assemblage comportant seize crayons contenant du gadolinium avec la disposition montrée en figure 2, présente, au cours de la phase initiale du cycle, une réactivité qui évolue peu (courbe B). Sa réactivité se rapproche ensuite de celle d'un assemblage dépourvu de crayons contenant du poison (courbe A).

Le fait que les premiers assemblages contenant du poison auront une influence sur les assemblages adjacents peut être utilisé de plusieurs façons.

Il est possible de conserver une durée de cycle normale, c'est-à-dire de l'ordre de l'année, du fait qu'elle permettra d'augmenter le taux de combustion des assemblages de combustible placés dans la région centrale du cœur en intercalant, parmi ces assemblages, des assemblages neufs, mais contenant du poison suivant une disposition conforme à l'invention. En effet, cette alternance d'assemblages ne provoquera pas de déséquilibre important, car l'effet des crayons contenant du poison d'un assemblage s'étendra aux assemblages adjacents.

L'invention peut également être utilisée, de façon particulièrement avantageuse, avec un cycle de combustion allongé, en adoptant un taux d'enrichissement plus important des assemblages, la réactivité supplémentaire ainsi produite pour les assemblages neufs étant compensée par la présence du poison.

**Revendications**

1. Cœur de réacteur nucléaire à eau légère sous pression, constitué d'assemblages de combustible nucléaire comportant chacun un faisceau de crayons de combustible maintenus dans les alvéoles d'un réseau régulier par un squelette ayant des pièces d'extrémité reliées par des tubes-guides (10) remplaçant les crayons dans certains alvéoles du réseau certains des assemblages ayant des crayons (12) qui contiennent un poison neutronique consommable répartis à la périphérie du réseau, caractérisé en ce que les assemblages munis de crayons (12) contenant du poison sont répartis dans l'ensemble du cœur, et en ce que les tubes-quides (10) sont disposés dans des alvéoles écartés d'au moins deux pas des alvéoles situés à la périphérie et sont écartés de l'axe du crayon (12) contenant du poison le plus proche par plus d'un pas du réseau.

2. Cœur selon la revendication 1, caractérisé en ce que les crayons contenant du poison sont disposés dans les alvéoles du réseau les plus éloignés des tubes-guides (10) constituant des veines d'eau.

3. Cœur selon la revendication 1 ou 2, caractérisé en ce que le poison neutronique est du gadolinium et en ce que les crayons contenant du poison comportent également du combustible.

4. Cœur selon la revendication 3, caractérisé en ce que les crayons contenant du poison neutronique consommable comportent des pastilles de dioxyde d'uranium à teneur en $Gd_2O_3$ allant jusqu'à 15%, avantageusement d'environ 8%).

5. Procédé d'exploitation de réacteur nucléaire à eau légère sous pression, suivant lequel, à l'issue d'un premier cycle, on enlève une fraction des assemblages de la partie centrale du cœur du réacteur et on en remplace certains par des assemblages précédemment situés à la périphérie, caractérisé en ce que:

on constitue initialement un cœur selon l'une quelconque des revendications 1 à 4, dont tous les assemblages sont neufs; et

à l'issue du premier cycle, on remplace certains des assemblages précédemment dans la partie centrale par des assemblages de combustible neufs dont certains au moins contiennent un poison neutronique consommable et on met en place à la partie périphérique du cœur ces assemblages de combustible neufs dont certains au moins contiennent du poison consommable, de façon à reconstituer un cœur selon l'une quelconque des revendications 1 à 4, mais comportant des assemblages ayant subi un premier cycle en réacteur.

## Patentansprüche

1. Kern eines Druckleichtwasserkernreaktors, gebildet aus Kernbrennstoffbaugruppen, welche jeweils eine Gruppe von Brennstäben umfassen, die in den Zellen eines regelmässigen Gitters durch ein Gerippe gehalten werden, welches zwei Endteile aufweist, die durch Leitrohre (10) miteinander verbunden sind, welche die Stäbe in bestimmten Zellen des Gitters ersetzen, wobei bestimmte Baugruppen Stäbe (12) aufweisen, welche ein abbrennbares Neutronengift enthalten, und die am Rand des Gitters verteilt sind, dadurch gekennzeichnet, dass die mit den das Gift enthaltenden Stäben (12) versehenen Baugruppen über den ganzen Kern verteilt sind, und dass die Leitrohre (10) in Zellen angeordnet sind, welche mindestens zwei Schritte von den am Rand gelegenen Zellen entfernt sind, und sie mehr als einen Gitterschritt von der Achse des nächstgelegenen gifthaltigen Stabes (12) entfernt sind.

2. Kern gemäss Anspruch 1, dadurch gekennzeichnet, dass die gifthaltigen Stäbe in den Zellen des Gitters angeordnet sind, welche am weitesten von den Leitrohren (10) entfernt sind, die Wasserlöcher darstellen.

3. Kern nach Anspruch 1 oder 2, dadurch gekennzeichnet, dass das Neutronengift Gadolinium ist, und die gifthaltigen Stäbe ebenfalls Brennstoff enthalten.

4. Kern nach Anspruch 3, dadurch gekennzeichnet, dass die ein abbrennbares Neutronengift enthaltenden Stäbe Urandioxidpastillen mit einem Gehalt an $Gd_2O_3$ von bis zu 15%, vorzugsweise ungefähr 8% enthalten.

5. Verfahren zum Betrieb eines Druckleichtwasserkernreaktors, bei dem man am Ende eines ersten Zyklus einen Teil der Baugruppen aus dem Zentralbereich des Reaktorkerns entfernt, und man bestimmte von ihnen durch Baugruppen ersetzt, die vorher am Rand angeordnet waren, dadurch gekennzeichnet, dass:
- man zunächst einen Kern gemäss irgendeinem der Ansprüche 1 bis 4 bildet, dessen Baugruppen alle neu sind; und
- man am Ende des ersten Zyklus bestimmte, zuvor im Zentralbereich befindliche Baugruppen durch neue Brennstoffbaugruppen ersetzt, von denen zumindest bestimmte ein abbrennbares Neutronengift enthalten, und man im Randbereich des Kerns diese neuen Brennstoffbaugruppen, von denen zumindest bestimmte das abbrennbare Gift enthalten, einordnet, um einen Kern gemäss irgendeinem der Ansprüche 1 bis 4 wiederherzustellen, der aber Baugruppen enthält, die einen ersten Zyklus im Reaktor durchlaufen haben.

## Claims

1. Core of a pressurized light water nuclear reactor constituted of nuclear fuel assemblies each having a bundle of fuel elements held in the cells of a regular network by a skeleton having end pieces mutually connected by guide tubes (10) substituted for the elements in some of the cells of the network, some of the assemblies having elements (12) which contain a burnable neutronic poison distributed at the periphery of the network, characterized in that the assemblies provided with poison-containing elements (12) are distributed throughout the core and in that the guide tubes (10) are located in cells spaced from the cells located at the periphery by at least two elementary spacings and are spaced from the axis of the closest poison-containing element (12) by more than one elementary spacing of the network.

2. Core according to claim 1, characterized in that the poison-containing elements are disposed in the cells of the network furthest away from those guide tubes (10) which define water streams.

3. Core according to claim 1 or 2, characterized in that the neutronic poison is gadolinium and in that the poison-containing elements also contain fuel.

4. Core according to claim 3, characterized in that those elements which contain burnable neutronic poison comprise uranium dioxide pellets with a $Gd_2O_3$ content of up to 15%, advantageously about 8%.

5. A process for operating a pressurized light water nuclear reactor wherein, after a first cycle, some of the assemblies of the central part of the reactor core are removed and some are replaced with fuel assemblies previously located at the periphery, characterized in that:
a core according to any one of claims 1–4, all assemblies of which are new, is first formed; and
at the end of the first cycle, some of the assemblies wich were previously located in the central part are substituted with new fuel assemblies some of which contain a burnable neutronic poison and said new fuel assemblies some at least of which contain burnable poison are located at the peripheral portion of the core, for reconstructing a core according to any one of claims 1–4, but including assemblies which were subjected to a firs cycle in the reactor.

# FIG.1a.

# FIG.1b.

# FIG.1c.

# FIG.2.

# FIG.3.

FIG.4.